# EUROPÄISCHE PATENTSCHRIFT

(11) **EP 1 236 916 B1**
(45) Veröffentlichungstag und Bekanntmachung des Hinweises auf die Patenterteilung: **18.10.2006**
(21) Anmeldenummer: 02002545.8
(22) Anmeldetag: 04.02.2002
(51) Int. Cl.: F16D 3/04, F16D 3/46

(54) **Wellenkupplung**
Shaft coupling
Accouplement d'arbre

(30) Priorität: 21.02.2001 DE 10108348
(43) Veröffentlichungstag der Anmeldung: 04.09.2002
(73) Patentinhaber: INKOMA MASCHINENBAU GMBH, 38162 CREMLINGEN (DE)
(72) Erfinder: Obermeier, Manfred, 38302 Wolfenbüttel (DE)
(74) Vertreter: Lins, Edgar

(56) Entgegenhaltungen:
- US-A- 1 244 533
- US-A- 4 643 699
- US-A- 4 941 861

## Beschreibung

Die Erfindung betrifft eine Wellenkupplung zur drehstarren Verbindung zweier rotierender Wellen, mit je einer Anschlussscheibe für die Wellen und einer zwischen den Anschlussscheiben angeordneten Zwischenscheibe, die an beide Anschlussscheiben über je eine radiale Nut-Steg-Verbindung angeschlossen ist, wobei die beiden Nut-Steg-Verbindungen um 90° zueinander gedreht angeordnet sind und der jeweilige Steg zylindrisch ausgebildet und an einer der Scheiben mittels Befestigungsmitteln durch Druck in Axialrichtung befestigt ist und in der zugehörigen Nut in Längsrichtung der Nut hin und her bewegbar und in der Nut um seine Längsachse um einen Winkelbereich drehbar gleitend gelagert ist.

Wellenkupplungen, die einen Parallelversatz der Wellen ausgleichen können, sind als Oldham-Kupplung seit vielen Jahrzehnten bekannt. Bei einem Parallelversatz der Wellen beschreibt die Zwischenscheibe bei jeder Wellendrehung zweimal einen Kreis mit dem Durchmesser des Parallelversatzes der Wellen. Die Kreisbewegung der Zwischenscheibe wird durch die Hin- und Herbewegung der Stege in den Nuten und die 90°-Verdrehung der beiden Nut-Steg-Verbindungen zueinander ermöglicht. Die Oldham-Kupplung ist nur aufgrund von Toleranzen geeignet, geringfügige Fluchtfehler der beiden rotierenden Wellen in Form einer Beugung auszugleichen.

Der maximale Beugungswinkel zwischen den rotierenden Wellen liegt in der Praxis je nach Größe der Kupplung zwischen 0,5° und 1,5°.

Oldham-Kupplungen haben sich für die drehstarre Verbindung von rotierenden Wellen bewährt, wenn ein Parallelversatz der Wellen auftreten kann. Beim Einsatz muss jedoch darauf geachtet werden, dass sich der axiale Abstand zwischen den rotierenden Wellen nicht verändert, da ein sich vergrößernder Abstand zum Herausfallen der Zwischenscheibe führen kann. Eine Verringerung des axialen Abstandes zwischen den rotierenden Wellen führt dazu, dass die Reibung zwischen der Zwischenscheibe und den Anschlussscheiben schlagartig erhöht wird, insbesondere wenn auch die aufeinander zeigenden Stirnseiten der Scheiben miteinander in Berührung geraten. Die Oldham-Kupplung ist daher bekanntermaßen nicht für axiale Zug- oder Druckkräfte geeignet. Ferner kann eine Oldham-Kupplung nicht paarweise eingesetzt werden, also zur Verbindung dreier Wellenstücke mit zwei Kupplungen, da das mittlere Wellenstück einfach herausfallen kann.

Durch die US 4,941,861 ist eine Wellenkupplung bekannt, bei der eine Zwischenscheibe angeformte Stege aufweist, die einen teilkreiszylindrischen Querschnitt aufweisen, wobei die auf den gegenüberliegenden Seiten der Zwischenscheibe angeordneten Stege um 90° zueinander gedreht sind. Auf die Stege der Zwischenscheibe sind rohrförmige Ansatzstücke aufschiebbar, da die Ansatzstücke Nuten aufweisen, in die die Stege einschiebbar sind. Die Ansatzstücke und die Zwischenscheibe mit den angeformten Stegen sind aus Kunststoff hergestellt. Zur Übertragung großer Drehmomente ist eine derartige Wellenverbindung nicht geeignet. Eine ähnliche Wellenkupplung ist durch US 5,421,780 bekannt, bei der die zylindrischen Stege an die Zwischenscheibe angeschweißt sind und darüber hinaus eine an den Enden herausstehende Druckfeder umfassen, die eine Rückstellung in eine zentrische Lage bewirken soll. Grundsätzlich könnten die zylindrischen Stege auch mit Befestigungsmitteln an der Zwischenscheibe angeschraubt sein, in diesem Fall wäre aber das gesamte Drehmoment von den Befestigungsmitteln zu übertragen. Demgemäß ist in den bevorzugten Ausführungsbeispielen zur Übertragung hoher Drehmomente eine zeitaufwändige Schweißverbindung dargestellt.

Die Ausbildung der Nut und des Steges mit einem kreiszylindrischen Querschnitt erlaubt die Aufnahme größerer Beugungswinkel zwischen den rotierenden Wellen durch die Wellenkupplung. Die Wellenkupplungen sind auf axialen Druck belastbar, da sich hierdurch die Kontaktfläche der Nut-Steg-Verbindung nicht bzw. nicht wesentlich ändert. Wenn die Nut den Steg über dessen größte Breitenausdehnung hinaus umgreifend in Axialrichtung der Zwischenscheibe fixiert hält, ist die Wellenkupplung auch auf axialen Zug belastbar. Dies ermöglicht die Hintereinanderschaltung beliebig vieler Wellenkupplungen, ohne dass die Funktionsfähigkeit gefährdet würde. Ein Herausfallen von Wellenabschnitten ist nicht möglich, da die Wellenkupplung die Wellenabschnitte in axialer Richtung zusammenhält

US 1,244,533 zeigt eine Oldham-Kupplung, bei der die mitnehmende Verbindung zwischen Anschlussscheibe und Zwischenscheibe mittels einer in die Zwischenscheibe eingebrachten Nut erfolgt, in die an der Anschlussscheibe befestigte, in einer Linie aufgereihte Kugeln hineinragen. Derartige Kupplungen sind ausschließlich auf Druck belastbar.

Der vorliegenden Erfindung liegt die Aufgabe zugrunde, eine Wellenkupplung der eingangs erwähnten Art für die Übertragung großer Drehmomente auszubilden und einfach herstellbar zu machen.

Zur Lösung dieser Aufgabe ist erfindungsgemäß eine Wellenkupplung der eingangs erwähnten Art dadurch gekennzeichnet, dass der Steg in eine axiale Ausnehmung der ihn tragenden Scheibe hineinragt und über seine Länge an Kanten der Ausnehmung zur formschlüssigen Übertragung eines Drehmoments anliegt und dass die Nut den Steg über dessen größte Breitenausdehnung hinaus umgreifend in Axialrichtung der Zwischenscheiben fixiert hält.

Die erfindungsgemäße Wellenkupplung ermöglicht die Ausbildung mit separat gefertigten Stegen, die einfach mit lösbaren Befestigungsmitteln montierbar und ggf. austauschbar sind. Die Befestigungsmittel, die die Stege in axialer Richtung gegen die sie tragende Scheibe drücken, werden jedoch nicht durch das übertragene Drehmoment belastet, da hierfür der Formschluss in Drehrichtung zwischen dem Umfangsabschnitt des Steges und der Wandung der Ausnehmung vorgesehen ist. Da die Nut den Steg über dessen größte Breitenausdehnung hinaus umgreifend in Axialrichtung der Zwischenscheiben fixiert hält, ist die Verbindung axial sowohl auf Druck als auch auf Zug belastbar.

In einer praktischen Ausführungsform der Erfindung sind die Nuten in den Anschlussscheiben ausgebildet und die Stege durch auf die Zwischenscheibe befestigte Zylinder gebildet. Dabei kann der Steg durch einen durchgehenden Zylinder, aber auch durch zwei Stegabschnitte gebildet sein, die einen mit der zugehörigen Welle fluchtenden Mittenbereich der Scheibe freilassen. Die Erfindung ist aber auch mit den Stegen auf den Anschlussscheiben und den Nuten auf der Zwischenscheibe realisierbar.

Die Nuten können zur Verminderung der Gleitreibung als Gleitlager, aber auch als Linear-Kugellager ausgebildet sein, wobei das Lager jeweils durch Lagerabschnitte gebildet sein kann.

Die erfindungsgemäße Wellenkupplung eignet sich insbesondere für Großkupplungen zur Übertragung hoher Drehmomente im Schwermaschinenbau.

Es ist ersichtlich, dass es für die Erfindung nicht auf die Umfangsform der Zwischenscheibe und/oder den Anschlussscheiben ankommt, die vorzugsweise rund, aber auch mit eckigem Querschnitt, als Kreuz o.ä. ausgestaltet sein können.

Die Erfindung soll im Folgenden anhand von in der Zeichnung dargestellten Ausführungsbeispielen näher erläutert werden. Es zeigen:
- **Figur 1**: eine Schnittdarstellung einer kompletten Wellenkupplung gemäß einer ersten Ausführungsform der Erfindung
- **Figur 2**: eine Seitenansicht einer Zwischenscheibe der Wellenkupplung gemäß Figur 1
- **Figur 3**: eine Draufsicht auf eine Stirnseite der Mittelscheibe gemäß Figur 2
- **Figur 4**: eine Schnittdarstellung einer Wellenkupplung gemäß einem zweiten Ausführungsbeispiel der Erfindung
- **Figur 5**: eine Seitenansicht einer Mittelscheibe mit Stegabschnitten gemäß dem zweiten Ausführungsbeispiel
- **Figur 6**: eine Draufsicht auf die Zwischenscheibe gemäß Figur 5
- **Figur 7**: eine Seitenansicht einer Anschlussscheibe mit einem Gleitlager
- **Figur 8**: eine Seitenansicht einer Anschlussscheibe gemäß Figur 7 mit einem Linearkugellager
- **Figur 9**: eine Nabenscheibe als Anschlussscheibe mit einem Gleitlager
- **Figur 10**: eine Nabenscheibe gemäß Figur 9 mit einem Linearkugellager
- **Figur 11**: eine andere Ausführungsform einer Nabenscheibe mit einem Gleitlager
- **Figur 12**: eine Nabenscheibe gemäß Figur 11 mit einem Linearkugellager
- **Figur 13**: eine Schnittdarstellung einer Wellenkupplung unter Verwendung der Nabenscheibe gemäß Figur 11 als Anschlussscheiben
- **Figur 14**: eine schematische Darstellung einer Variante einer Zwischenscheibe.

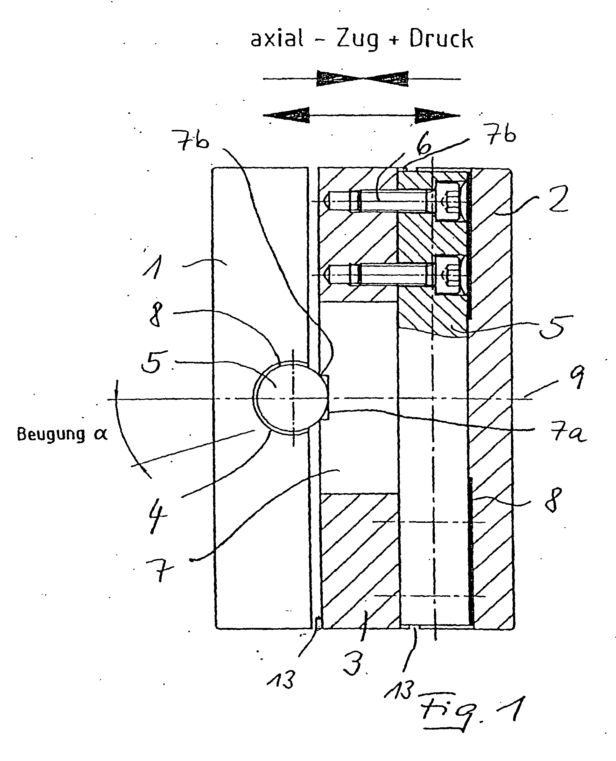

Die in den Figuren 1 bis 3 dargestellte Wellenkupplung gemäß einer ersten Ausführungsform weist eine erste Anschlussscheibe 1, eine zweite Anschlussscheibe 2 und eine zwischen den beiden Anschlussscheiben 1, 2 angeordnete Zwischenscheibe 3 auf. Die beiden Anschlussscheiben 1, 2 sind in prinzipiell gleicher Weise aufgebaut, jedoch gegeneinander um 90° verdreht. Die kreiszylindrischen Anschlussscheiben 1, 2 weisen eine durch ihren Mittelpunkt laufende, einen Durchmesser bildende Nut 4 auf, die eine Querschnittsform eines Kreissegments hat, das sich über mehr als einen Halbkreis erstreckt. Ein in Form eines Kreiszylinders ausgebildeter Steg 5 ist in die Nut 4 eingeschoben und mittels in den Steg 5 versenkter Schrauben 6 an der Zwischenscheibe 3 befestigt. Hierfür ragt der Steg 5 mit einem Umfangsabschnitt in eine in der Zwischenscheibe 3 in Längsrichtung des Steges 5 vorgesehene, im Querschnitt rechteckige Ausnehmung a, und zwar derart, dass der Steg 5 in seiner Längsrichtung als Umfang an der Wandung 7b der Ausnehmung 7a anliegt. In der Drehebende senkrechte zur Mittelachse 9 der Wellenkupplung bildet der Steg 5 mittels der Ausnehmung 7a eine formschlüssige Verbindung mit der Zwischenscheibe 3. Die Schrauben 6 werden daher nur in ihrer Längsrichtung zum Anpressen des Stegs 5 an die Zwischenscheibe 3 belastet, nicht jedoch durch das übertragene Drehmoment.

Wegen der Verdrehung der beiden kreiszylindrischen Stege 5 gegeneinander um 90° ist der in Figur 1 erkennbare Steg 5 in seiner Querschnittsfläche dargestellt, während der rechte Steg 5 in Längsrichtung geschnitten ist. Die Zwischenscheibe 3 ist im Zentrum mit einer kreisrunden Ausnehmung 7 versehen.

Zur Verminderung der Gleitreibung zwischen dem kreiszylindrischen Steg 5 und der zugehörigen kreisabschnittförmigen Nut 4 ist in die Oberfläche der Nut 4 ein Gleitlager 8 eingesetzt, wobei insbesondere in Figur 1 anhand der Anschlussscheibe 2 zu erkennen ist, dass das Gleitlager 8 aus zwei Lagerabschnitten im radialen Außenbereich der Nut 4 besteht.

Figur 1 lässt erkennen, dass die Wellenkupplung relativ große Beugungswinkel α aufnehmen kann, indem lediglich die Anschlussscheiben 1, 2 während einer Umdrehung der Wellenkupplung nach Art einer Sinuskurve um den Mittelpunkt des kreiszylindrischen Stegs 5 hin und her verschwenken, und zwar mit der Auslenkung des Beugungswinkels α. Zur Aufnahme dieser Verschwenkung ist zwischen den Anschlussscheiben 1, 2 und der Zwischenscheibe 3 jeweils ein axialer Spalt 13 vorgesehen. Relativ zu den feststehenden Anschlussscheiben 1, 2 führt die Zwischenscheibe 3 somit bei zueinander gebeugten rotierenden Wellen eine Taumelbewegung in die Spalte 13 hinein aus. Bei einem zusätzlichen seitlichen Versatz der Wellenachsen zueinander entsteht ferner eine doppelte exzentrische Kreisbewegung der Zwischenscheibe 3, die zu der Hin- und Herverschiebung der Stege 5 in den zugehörigen Nuten 4 führt.

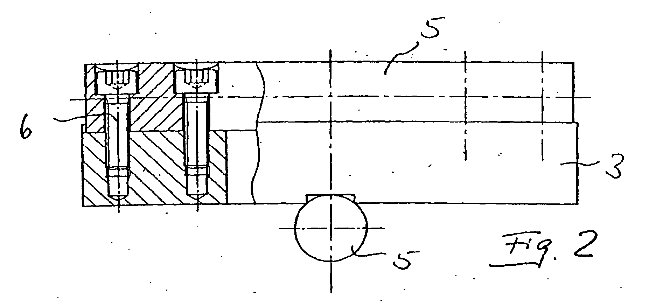

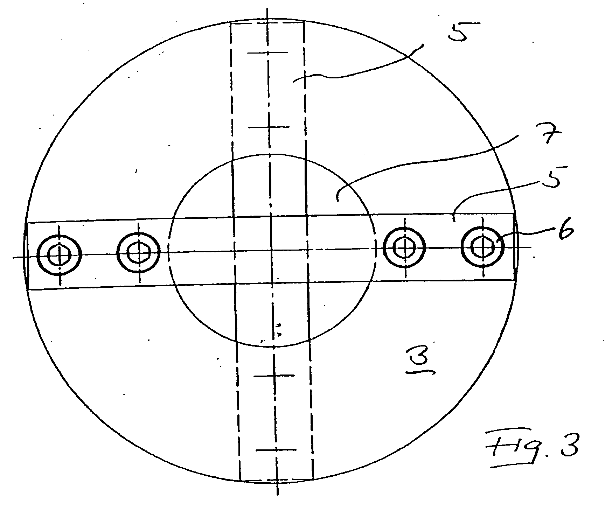

Figur 2 und 3 zeigen Ansichten der Zwischenscheibe drei mit den beiden um 90° zueinander gedreht auf beiden Seiten der Zwischenscheibe 3 befestigten kreiszylindrischen Stegen 5.

In der Darstellung der Figur 3 ist ein vorderer Steg 5 horizontal angeordnet, während ein hinter der Zwischenscheibe 3 befestigter Steg 5 in vertikaler Richtung ausgerichtet ist. Die Befestigung beider Stege 5 erfolgt durch jeweils vier Schrauben 6.

Da die Nuten 4 die Stege 5 über mehr als einen Halbkreis umfassen, sich also nach Erreichend der größten Breite des Steges 5 wieder verengen, ist der Steg 5 in der Nut 4 in Richtung einer Mittelachse 9 der Zwischenscheibe 3 fixiert, woraus sich ergibt, dass die dargestellte Wellenkupplung axial sowohl auf Zug als auch auf Druck belastbar ist.

In der dargestellten Ausführungsform mit einer im Querschnitt kreisabschnittförmigen Nut 4 und einem kreiszylindrischen Steg 5 wird eine hohe mechanische Stabilität und Belastbarkeit erzielt. Zur Verringerung der Gleitreibung kann es jedoch auch zweckmäßig sein, die Anlagefläche des Steges 5 zur Wandung der Nut 4, also beispielsweise zum Gleitlager 8 flächenmäßig zu verkleinern, indem die Oberfläche des Steges 5 in Form von Rippen ausgebildet ist, sodass zwischen Anlagepunkten des Steges 5 an dem Gleitlager 8 nicht anliegende Zwischenräume bestehen. In einer Weiterführung kann der Steg 5 auch als Mehreck ausgebildet sein, wobei die Oberflächen des Mehrecks vorzugsweise an die Oberfläche der Wandung der Nut 4 angepasst sind, also im Querschnitt Kreisringabschnitte bilden.

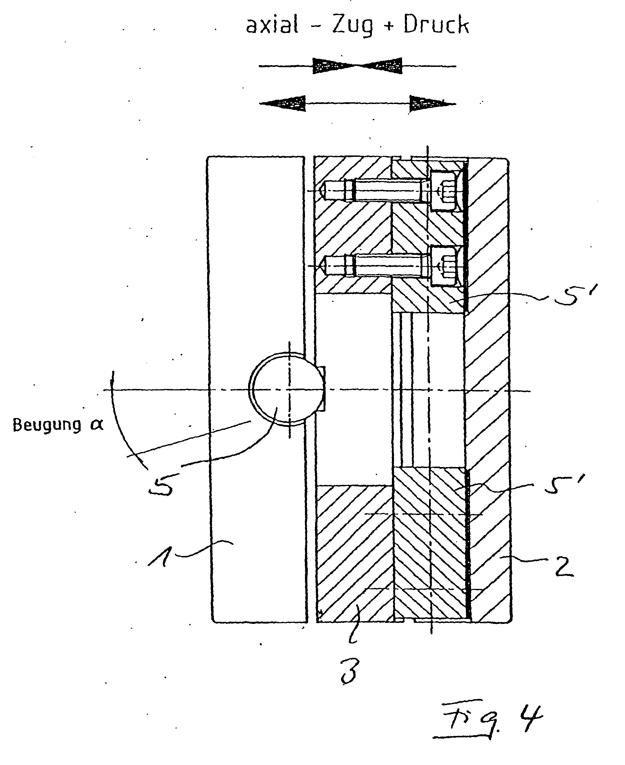

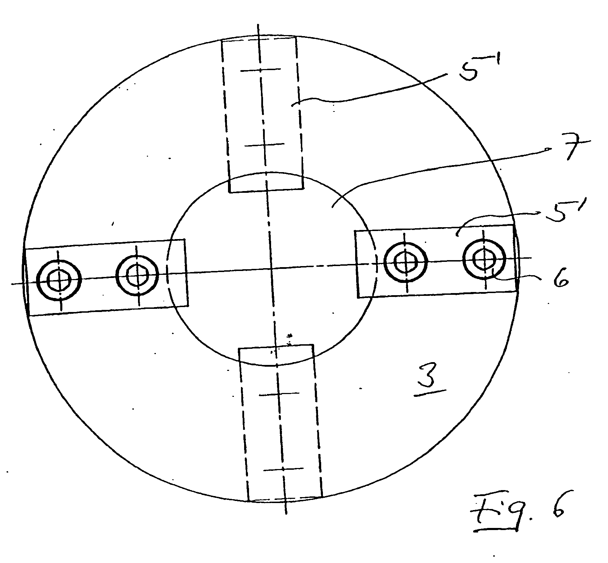

Bei dem in den Figuren 4 bis 6 dargestellten Ausführungsbeispiel sind die Stege 5 jeweils durch zwei Stegabschnitte 5' gebildet, sodass die Ausnehmung 7 im Zentrum der Zwischenscheibe 3 nicht durch die Stege 5 gequert wird, wie dies für das erste Ausführungsbeispiel in Figur 3 deutlich wird.

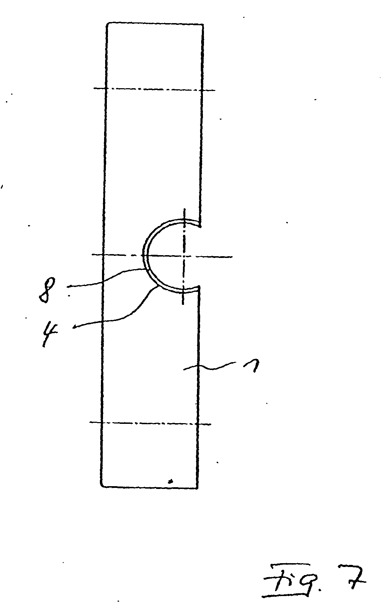

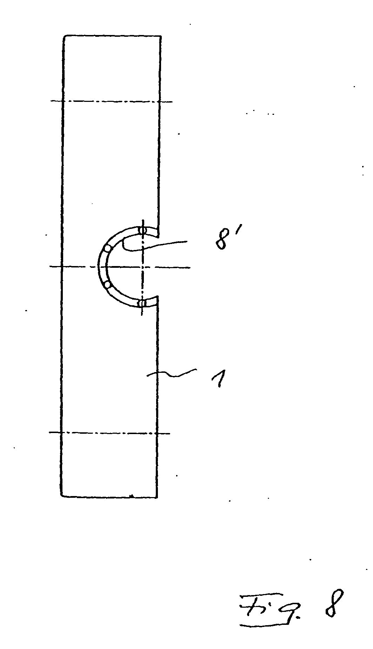

Figur 7 zeigt eine Seitenansicht einer Anschlussscheibe 1 mit der im Querschnitt etwas mehr als halbkreiszylindrischen Nut 4, die mit einem Gleitlager 8 beschichtet ist. Bei dem in Figur 8 dargestellten Ausführungsbeispiel ist die im Übrigen gleiche Anschlussscheibe 1 mit einem Linearkugellager 8' anstelle des Gleitlagers 8 versehen.

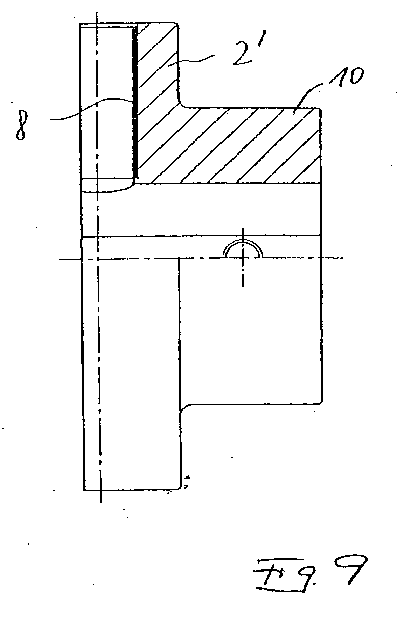

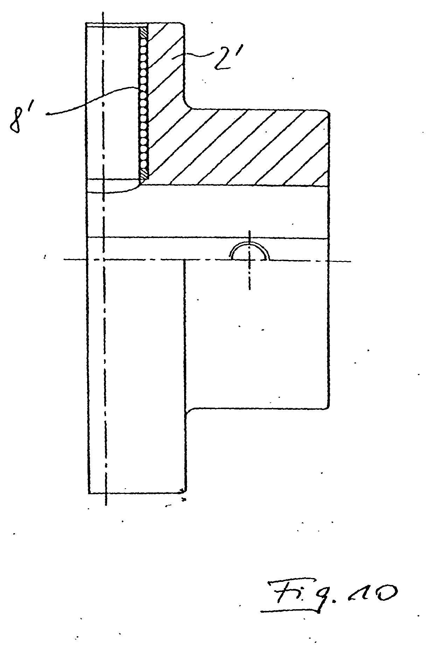

Figur 9 zeigt eine Anschlussscheibe 2' die mit einem Nabenansatz 10 versehen ist und so eine herkömmliche Nabenscheibe bildet. Die in Figur 9 dargestellte Nabenscheibe 2' ist mit einem Gleitlager 8 versehen. Demgegenüber ist die in Figur 10 dargestellte, im Übrigen identische Nabenscheibe 2' mit einem Linearkugellager 8' ausgestattet.

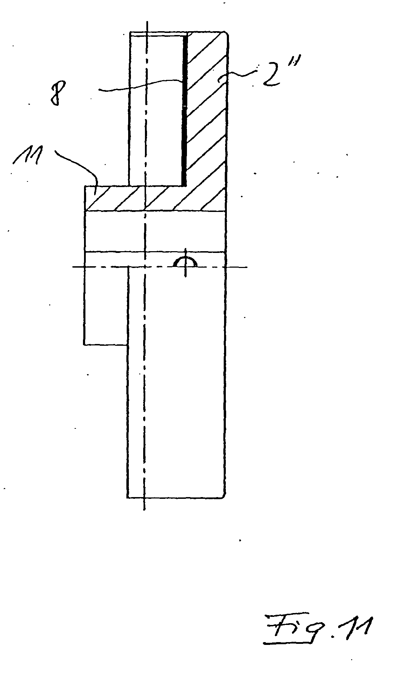

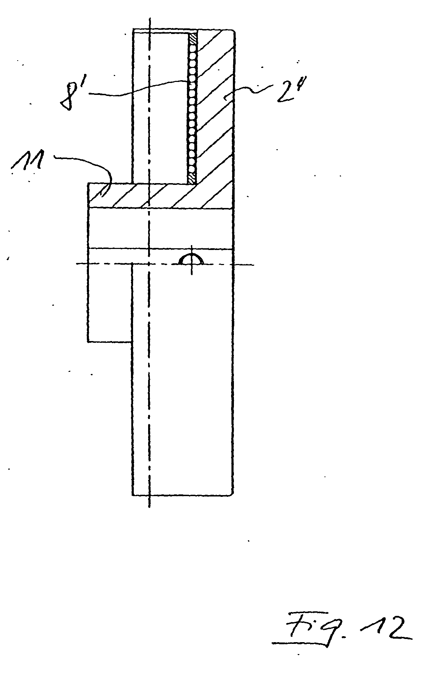

Figur 11 zeigt eine Variante einer Anschlussscheibe 2" mit einem nach innen, d.h. zur Zwischenscheibe 3 hin gerichteten Nabenansatz 11, an dem das hier vorgesehene Gleitlager 8 endet. Bei dem in Figur 12 dargestellten, im Übrigen gleichen Ausführungsbeispiel der Anschlussscheibe 2" ist das Gleitlager 8 wiederum durch ein Linearkugellager 8' ersetzt.

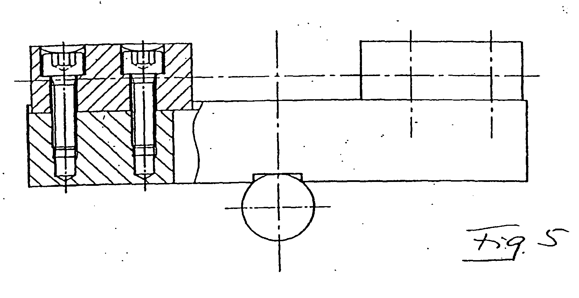

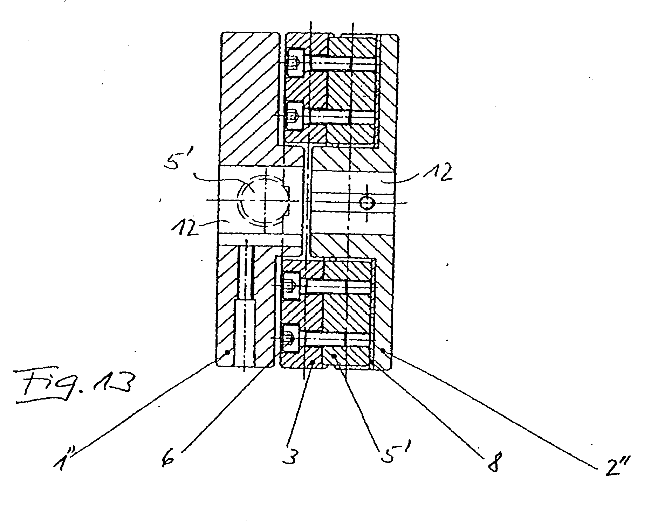

Figur 13 verdeutlicht beispielhaft in einer Schnittdarstellung ein weiteres Ausführungsbeispiel einer erfindungsgemäßen Wellenkupplung, das mit zwei Anschlussscheiben 2" und einer Zwischenscheibe 3 gemäß Figuren 4 und 5 mit kreiszylindrischen Stegabschnitten 5' ausgebildet ist. Die auf beiden Seiten dargestellte Querschnittsformen von Aufnahmebohrungen 12 der als Nabenscheiben ausgebildeten Anschlussscheiben 1", 2" die drehfeste Kupplungsmöglichkeit der Anschlussscheiben 2" mit entsprechenden Antriebs- bzw. Abtriebswellen.

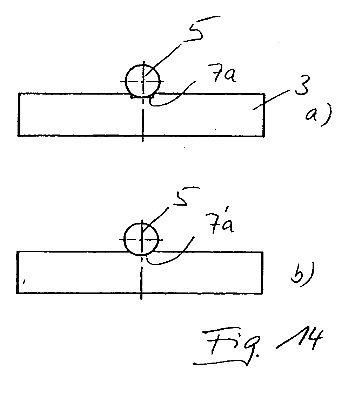

Figur 14 verdeutlicht, dass der Formschluss zwischen Steg 5 und Zwischenscheibe 3 über die Wandung 7b der Ausnehmung 7a linienförmig erfolgt, wenn die Ausnehmung 7a im Querschnitt rechteckig ausgebildet ist. Gemäß Figur 14b kann auch eine flächige Übertragung des Drehmoments erfolgen, wenn die Ausnehmung 7a' als teilkreiszylindrische Ausnehmung an die Form des kreiszylindrischen Steges 5 angepasst ist.

Die dargestellten Ausführungsbeispiele verdeutlichen, dass beliebige Formen von Anschlussscheiben und Verbindungsmöglichkeiten zu den Wellen für die erfindungsgemäße Wellenkupplung realisierbar sind.

## Patentansprüche

1. Wellenkupplung zur drehstarren Verbindung zweier rotierender Wellen, mit je einer Anschlussscheibe (1, 2; 2'; 1", 2") für die Wellen und einer zwischen den Anschlussscheiben (1, 2; 2'; 1", 2") angeordneten Zwischenscheibe (3), die an beide Anschlussscheiben (1, 2; 2'; 1", 2") über je eine radiale Nut-Steg-Verbindung (4, 5) angeschlossen ist, wobei die beiden Nut-Steg-Verbindungen (4, 5) um 90° zueinander gedreht angeordnet sind und der jeweilige Steg (5) zylindrisch ausgebildet und an einer der Scheiben (3) mittels Befestigungsmitteln (6) durch Druck in Axialrichtung befestigt ist und in der zugehörigen Nut (4) in Längsrichtung der Nut (4) hin und her bewegbar und in der Nut (4) um seine Längsachse um einen Winkelbereich drehbar gleitend gelagert ist, **dadurch gekennzeichnet, dass** der Steg (5) in eine axiale Ausnehmung (7a) der ihn tragenden Zwischenscheibe (3) hineinragt und über seine Länge an Kanten (7b) der Ausnehmung zur formschlüssigen Übertragung eines Drehmoments anliegt und dass die Nut (4) den Steg (5) über dessen größte Breitenausdehnung hinaus umgreifend in Axialrichtung (9) der Zwischenscheiben (3) fixiert hält.

2. Wellenkupplung nach Anspruch 1, **dadurch gekennzeichnet, dass** der Steg (5) einen kreiszylindrischen Querschnitt und die Nut (4) einen entsprechenden teilkreiszylindrischen Querschnitt aufweist.

3. Wellenkupplung nach Anspruch 1, **dadurch gekennzeichnet, dass** Nut (4) und Steg (5) der Nut-Steg-Verbindung (4, 5) so ausgebildet sind, dass die Lagerung des Steges (5) in der Nut (4) nur aus Abschnitten einer Kreiskontur besteht.

4. Wellenkupplung nach einem der Ansprüche 1 bis 3, **dadurch gekennzeichnet, dass** wenigstens einer der Stege (5) durch zwei Stegabschnitte (5') gebildet ist, die einen mit der zugehörigen Welle fluchtenden Mittenbereich (7) der Scheibe (3) freilassen.

5. Wellenkupplung nach einem der Ansprüche 1 bis 4, **dadurch gekennzeichnet, dass** wenigstens eine der Nuten (4) als Gleitlager (8) ausgebildet ist.

6. Wellenkupplung nach einem der Ansprüche 1 bis 5, **dadurch gekennzeichnet, dass** wenigstens eine der Nuten (4) als Linear-Kugellager (8') ausgebildet ist.

7. Wellenkupplung nach Anspruch 5 oder 6, **dadurch gekennzeichnet, dass** das Lager (8, 8') durch Lagerabschnitte gebildet ist.

8. Wellenkupplung nach einem der Ansprüche 1 bis 7, **dadurch gekennzeichnet, dass** ein maximaler Winkel α einer Schrägstellung zwischen den Wellen durch zwischen den Anschlussscheiben (1, 2; 2'; 1', 2', 2") und der Zwischenscheibe (3) vorgesehenen axialen Spalten aufnehmbar ist.

## Claims

1. Shaft coupling for the rotationally rigid connection of two rotating shafts, comprising a respective connecting disc (1, 2; 2'; 1", 2") for the shafts and an intermediate disc (3) which is arranged between the connecting discs (1, 2; 2' ; 1", 2") and is connected to both connecting discs (1, 2; 2'; 1", 2") via a respective radial groove/web connection (4, 5), the two groove/web connections (4, 5) being arranged so as to be rotated by 90° relative to one another, and the respective web (5) being of cylindrical design and being fastened to one of the discs (3) by means of fastening means (6) by pressure in the axial direction and being movable back and forth in the associated groove (4) in the longitudinal direction of the groove (4) and being mounted in a sliding manner in the groove (4) in such a way as to be rotatable by an angular dimension about its longitudinal axis, **characterized in that** the web (5) projects into an axial recess (7a) of the intermediate disc (3) carrying it and bears over its length against edges (7b) of the recess for the positive-locking transmission of a torque, and **in that** the groove (4) encloses the web (5) beyond its maximum width and holds it in a fixed position in the axial direction (9) of the intermediate discs (3).

2. Shaft coupling according to Claim 1, **characterized in that** the web (5) has a circular-cylindrical cross section and the groove (4) has a corresponding partly circular-cylindrical cross section.

3. Shaft coupling according to Claim 1, **characterized in that** the groove (4) and the web (5) of the groove/web connection (4, 5) are designed in such a way that the mounting of the web (5) in the groove (4) consists only of sections of a circular contour.

4. Shaft coupling according to one of Claims 1 to 3, **characterized in that** at least one of the webs (5) is formed by two web sections (5') which leave open a centre region (7) of the disc (3), this centre region (7) being in alignment with the associated shaft.

5. Shaft coupling according to one of Claims 1 to 4, **characterized in that** at least one of the grooves (4) is designed as a sliding bearing (8).

6. Shaft coupling according to one of Claims 1 to 5, **characterized in that** at least one of the grooves (4) is designed as a linear ball bearing (8').

7. Shaft coupling according to Claim 5 or 6, **characterized in that** the bearing (8, 8') is formed by bearing sections.

8. Shaft coupling according to one of Claims 1 to 7, **characterized in that** a maximum angle α of an inclination between the shafts can be accommodated by axial gaps provided between the connecting discs (1, 2; 2'; 1', 2', 2") and the intermediate disc (3).

## Revendications

1. Accouplement d'arbres pour réaliser une liaison rigide entre deux arbres rotatifs, comprenant chacun un disque de raccordement (1, 2 ; 2'; 1", 2") pour les arbres et un disque intercalaire (3) disposé entre les disques de raccordement (1, 2 ; 2' ;1", 2"), qui sont raccordés à chacun des deux disques de raccordement (1, 2 ; 2' ;1", 2") par une liaison radiale du type rainure clavette (4, 5), les deux liaisons du type rainure clavette (4, 5) étant décalées angulairement de 90° l'une de l'autre,chacune des clavettes (5) étant cylindrique et étant fixée à un disque (3) au moyen d'organes de fixation (6) par pression dans la direction axiale et est logée dans la rainure (4) correspondante de façon mobile dans les deux sens suivant la direction de la longueur de la rainure (4) et pivotante autour de l'axe de la longueur de la rainure (4) selon un secteur angulaire, **caractérisé en ce que** la clavette (5) pénètre dans un évidement axial (7a) réalisé dans le disque intercalaire (3) qui la porte et prend appui suivant sa longueur sur des arêtes (7b) de l'évidement pour supporter par coopération de formes un couple de rotation et **en ce que** la rainure (4) maintient fixement la clavette (5) par son extension en largeur la plus grande qui est enveloppée dans la direction axiale (9) des disques intercalaires (3).

2. Accouplement d'arbres selon la revendication 1, **caractérisé en ce que** la clavette (5) présente une section cylindrique circulaire et la rainure (4) présente une section partiellement cylindrique circuclaire correspondante.

3. Accouplement d'arbres selon la revendication 1, **caractérisé en ce que** la rainure (4) et la clavette (5) de la liaison rainure clavette (4, 5) sont réalisées de telle sorte que la position de la clavette (5) dans la rainure (5) ne présente un contour circulaire que sur certaines parties.

4. Accouplement d'arbres selon l'une des revendications 1 à 3, **caractérisé en ce qu'**au moins l'une des clavettes (5) est réalisée sous forme de deux parties de clavettes (5') qui laisse libre une zone centrale (7) du disque (3) affleurant avec l'arbre correspondant.

5. Accouplement d'arbres selon l'une des revendications 1 à 4, **caractérisé en ce qu'**au moins l'une des rainures (4) est réalisée en tant que palier de glissement (8).

6. Accouplement d'arbres selon l'une des revendications 1 à 5, **caractérisé en ce qu'**au moins l'une des rainures (4) est réalisée en tant que palier linéaire à billes (8').

7. Accouplement d'arbres selon l'une des revendications 5 ou 6, **caractérisé en ce que** le palier (8, 8') est constitué de sections de palier.

8. Accouplement d'arbres selon l'une des revendications 1 à 7, **caractérisé en ce qu'**un angle maximum α d'une position inclinée entre les arbres est admissible par des fentes axiales prévues entre les disques de raccordement (1, 2 ; 2' ; 1', 2', 2") et le disque intercalaire (3).
